# EUROPÄISCHE PATENTSCHRIFT

(11) **EP 3 768 393 B1**
(45) Veröffentlichungstag und Bekanntmachung des Hinweises auf die Patenterteilung: **11.09.2024**
(21) Anmeldenummer: 19709080.6
(22) Anmeldetag: 14.03.2019
(51) Int. Cl.: A62C 2/06, H02G 3/04, A62C 3/16, F16L 5/04, H02G 3/22

(54) **BRANDSCHUTZEINRICHTUNG SOWIE BRANDSCHUTZBAUGRUPPE**
FIRE PROTECTION DEVICE AND FIRE PROTECTION ASSEMBLY
DISPOSITIF DE PROTECTION CONTRE L'INCENDIE AINSI QUE MODULE DE PROTECTION CONTRE L'INCENDIE

(30) Priorität: 21.03.2018 EP 18163071
(43) Veröffentlichungstag der Anmeldung: 27.01.2021
(73) Patentinhaber: Hilti Aktiengesellschaft, 9494 Schaan (LI)
(72) Erfinder: SIMON, Sebastian, 86807 Buchloe Lindenberg (DE)
(74) Vertreter: Hilti Aktiengesellschaft Corporate Intellectual Property
(86) Internationale Anmeldenummer: PCT/EP2019/056417
(87) Internationale Veröffentlichungsnummer: WO 2019/179873

(56) Entgegenhaltungen:
- EP-A1- 3 088 783
- DE-U1- 9 411 293
- JP-A- 2017 172 748

## Beschreibung

Die Erfindung betrifft eine Brandschutzeinrichtung zum Abschotten von Durchgangsöffnungen in Wand- oder Deckenelementen aus Holz oder einem ähnlichen Material, insbesondere von Leitungs- oder Rohrdurchgängen, sowie eine Brandschutzbaugruppe.

Verschiedene Brandschutzeinrichtungen (z.B. Brandschutzmanschetten) zum Verschließen von Durchgangsöffnungen in Decken oder Wänden in einem Brandfall sind aus dem Stand der Technik bekannt. Üblicherweise weisen diese Brandschutzeinrichtungen ein intumeszierendes Material auf, das um Leitungen oder Rohre angeordnet ist, die durch die Durchgangsöffnungen verlaufen. Im Brandfall verschließt das intumeszierendes Material die Durchgangsöffnungen und verhindert so die Ausbreitung von Feuer und/oder Rauch durch die Durchgangsöffnung. Derartige Brandschutzeinrichtungen sind zum Beispiel in der JP 2017 172748 A und der DE 94 11 293 U1 offenbart.

Ist die entsprechende Decke oder Wand aus Holz oder einen ähnlichen brennbaren Material gefertigt, so gewährleisten die bekannten Brandschutzeinrichtungen jedoch nur reduzierte Brandschutzzeiten, da durch Abbrand des Materials der Decke oder der Wand eine Lücke entsteht, durch die hindurch sich Feuer und/oder Rauch durch die Durchgangsöffnung ausbreiten kann.

Aufgabe der Findung ist es daher, eine Brandschutzeinrichtung zum Abschotten von Durchgangsöffnungen sowie eine Brandschutzbaugruppe bereitzustellen, die bei brennbaren Decken oder Wänden optimale Brandschutzzeiten gewährleisten.

Die Aufgabe wird erfindungsgemäß gelöst durch eine Brandschutzeinrichtung der eingangs genannten Art, die einen Grundkörper und zumindest einen Expansionskörper umfasst, der an einer Stirnseite des Grundkörpers angebracht ist und ein intumeszierendes Material enthält und gemäß Anspruch 1 definiert ist. Im Brandfall dehnt sich der Expansionskörper aus und kompensiert somit einen Materialverlust, der am Wand-oder Deckenelement durch Abbrand entsteht. Die Durchgangsöffnung ist also im Brandfall trotz des brennbaren Materials, durch das hindurch die Durchgangsöffnung verläuft, sicher verschlossen, insbesondere rauchdicht. Zudem vermindert das intumeszierende Material einen Wärmetransport, sodass eine Temperatur auf einer der Brandschutzeinrichtung gegenüberliegenden Seite des Wand- oder Deckenelements länger unterhalb einer kritischen Temperatur (Zündtemperatur) bleibt. Somit ist die Brandschutzzeit wesentlich verbessert und eine Ausbreitung von Rauch effektiv verhindert.

Die verbesserte Brandschutzzeit wurde in einem Brandschutztest nach DIN EN 1366 mit einer Einheitstemperaturzeitkurve (ETK) belegt. Der Test wurde für einen an einer Durchgangsöffnung angebrachten Metallflansch mit einer aus dem Stand der Technik bekannten Brandschutzeinrichtung und mit einer erfindungsgemäßen Brandschutzeinrichtung durchgeführt, wobei das entsprechende Wandelement aus Holz bestand. Die Ergebnisse der beiden Brandschutztests sind in der folgenden Tabelle zusammengefasst:

| Brandtestzeit [min] | Brandschutzeinrichtung aus dem Stand der Technik | Erfindungsgemäße Brandschutzeinrichtung |
|---|---|---|
| 1 | Start des Brandschutztests | Start des Brandschutztests |
| 5 | Holzoberfläche entzündet sich | Holzoberfläche entzündet sich |
| 14 | Abbrand der Holzoberfläche beginnt | Abbrand der Holzoberfläche beginnt |
| 22 | Abbrand unter Metallflansch erkennbar | Expansionskörper dehnt sich sichtbar aus |
| 25 | | Intumeszierendes Material quillt seitlich neben dem Metallflansch hervor |
| 29 | | Ein Ascheblock hat sich um den Metallflansch herum gebildet |

| | | |
|---|---|---|
| 30 | Abbrand unter Metallflansch erzeugt Lücke | Lücke zwischen Metallflansch und Holz vom intumeszierenden Material geschlossen |
| 42 | | Teile des intumeszierenden Materials fallen auf der dem Feuer zugewandten Seite ab |
| 60 | | Intumeszierendes Material um den Metallflansch herum ist noch immer kompakt |
| 80 | Leichter Rauch tritt auf der feuerabgewandten Seite der Durchgangsöffnung aus | Kein Austritt von Rauch auf der feuerabgewandten Seite der Durchgangsöffnung |
| 88 | | Leichter Rauch tritt auf der feuerabgewandten Seite der Durchgangsöffnung aus |
| 90 | Testende | Testende |

Aus diesen Ergebnissen ist klar ersichtlich, dass durch die erfindungsgemäße Brandschutzeinrichtung die Brandschutzzeit verbessert ist. In diesem speziellen Fall wurde eine Ausbreitung von Rauch auf die feuerabgewandte Seite acht Minuten länger verhindert.

Gemäß einer Ausgestaltung der Erfindung weist der Grundkörper eine im Wesentlichen zylindrische Form auf. Zylindrisch kann dabei sowohl kreiszylindrisch als auch im allgemeinen mathematischen Sinne zylindrisch bedeuten. Insbesondere ist die Form des Grundkörpers an die Form der Durchgangsöffnung angepasst.

Der Grundkörper weist eine Durchgangsöffnung auf. Diese ist beispielsweise kreiszylindrisch oder im allgemeinen mathematischen Sinne zylindrisch ausgebildet. Insbesondere ist die Durchgangsöffnung dazu ausgebildet, Kabel und/oder Rohre aufzunehmen.

Weiter bevorzugt ist an einer Innen- und/oder Außenseite des Grundkörpers ein weiterer Expansionskörper vorgesehen. Insbesondere enthält der weitere Expansionskörper ein intumeszierendes Material. Der weitere Expansionskörper ist beispielsweise an einer Wandung des Grundkörpers vorgesehen, die eine Durchgangsöffnung durch den Grundkörper definiert. Der weitere Expansionskörper dehnt sich im Brandfall aus und verschließt die Durchgangsöffnung auch dann zuverlässig, wenn durch den Grundkörper hindurchgeführte Leitungen und/oder Rohre nicht feuerfest sind. Unter nicht feuerfest ist in diesem Kontext zu verstehen, dass die Leitungen oder Rohre bei Temperaturen, die bei einem Brand auftreten, verbrennen oder sich verformen.

Die Erfindung sieht vor, dass sich der Expansionskörper in einem äußeren Bereich der Stirnseite erstreckt. Weist der Grundkörper eine Durchgangsöffnung auf, so erstreckt sich der Expansionskörper in einem Bereich, der, in axialer Richtung des Grundkörpers gesehen, radial zwischen der Durchgangsöffnung und einer Außenseite des Grundkörpers liegt. Insbesondere umschließt der Expansionskörper die Durchgangsöffnung in Umfangsrichtung komplett (kann jedoch in axialer Richtung gegenüber der Durchgangsöffnung versetzt sein). Dadurch ist ein Eindringen von Rauch besonders effektiv verhindert und die Wärmeübertragung weiter vermindert.

Gemäß einem weiteren Aspekt enthält der Expansionskörper Blähgraphit. Anders ausgedrückt umfasst das intumeszierende Material Blähgraphit oder ist aus Blähgraphit gebildet. Blähgraphit weist für Brandschutzzwecke besonders gut geeignete Eigenschaften (insbesondere Volumenvergrößerung und Wärmeleitfähigkeit) auf.

Eine Wandung des Expansionskörpers kann aus einem acrylatbasierten Material gebildet sein.

Vorzugsweise ist das intumeszierendes Material auf ein Trägermaterial aufgebracht, das insbesondere ein Gewebematerial mit Glasfasern oder einem anderen feuerfesten Material umfasst. Über das Trägermaterial kann das intumeszierendes Material einfach am Grundkörper angebracht werden.

Ein weiterer Aspekt sieht vor, dass der Expansionskörper und das intumeszierende Material derart gestaltet sind, dass der Expansionskörper in einem Brandfall einen Abbrand des Wand- oder Deckenelements zumindest kompensiert, insbesondere überkompensiert. Der Expansionskörper kann also mehr intumeszierendes Material enthalten, als nötig wäre, um die Durchgangsöffnung in einem Brandfall zu verschließen. Insbesondere dehnt sich das zusätzliche intumeszierende Material im Brandfall, in axialer Richtung der Durchgangsöffnung betrachtet, radial über die Durchgangsöffnung hinaus aus. Das zusätzliche intumeszierende Material bildet dann eine Art Schutzring, der eine Wärmeübertragung auf das Wand- oder Deckenelement verringern und somit einen Abbrand des Wand- oder Deckenelements verzögern kann.

Die Aufgabe wird ferner erfindungsgemäß gelöst durch eine Brandschutzbaugruppe mit einem Wand- oder Deckenelement aus Holz oder einem ähnlichen Material, das eine Durchgangsöffnung aufweist, insbesondere einen Leitung- oder vor Durchgang, und wenigstens einer erfindungsgemäßen Brandschutzeinrichtung, wobei die Brandschutzeinrichtungen im Bereich der Durchgangsöffnung am Wand- oder Deckenelement angebracht ist. Bezüglich der Vorteile wird auf die obigen Erläuterungen verwiesen.

Ein Aspekt sieht vor, dass eine weitere erfindungsgemäße Brandschutzeinrichtung an einer der ersten Brandschutzeinrichtung gegenüberliegenden Seite am Wand- oder Deckenelement angebracht ist. Auf diese Weise ist unabhängig vom Ort eines Brandes die Durchgangsöffnung sicher verschlossen und eine hohe Brandschutzzeit gewährleistet.

Vorzugsweise ist die wenigstens eine Brandschutzeinrichtung derart an dem Wand- oder Deckenelement angebracht, dass der Expansionskörper unmittelbar am Wand- oder Deckenelement anliegt. Dadurch ist bereits zu Beginn eines Brandes die Durchgangsöffnung sicher verschlossen.

Weitere Vorteile und Eigenschaften der Erfindung ergeben sich aus der nachfolgenden Beschreibung und den Zeichnungen, auf die Bezug genommen wird. In diesen zeigen:
- Fig. 1 einen Längsschnitt durch eine erfindungsgemäße Brandschutzbaugruppe;
- Fig. 2 die Brandschutzbaugruppe von Figur 1 in einem Brandfall; und
- Fig. 3 eine erfindungsgemäße Brandschutzbaugruppe gemäß einer alternativen Variante.

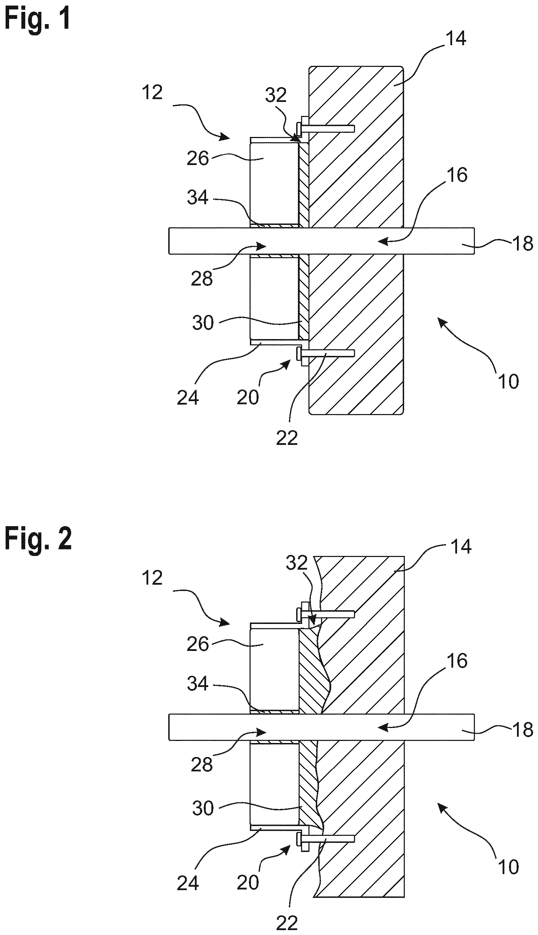

In Figur 1 ist eine Brandschutzbaugruppe 10 mit einer Brandschutzeinrichtung 12 und einem Wand- oder Deckenelement 14 gezeigt.

Solche Brandschutzeinrichtungen 12 dienen allgemein ausgedrückt dazu, Durchgangsöffnungen in Wand-oder Deckenelementen in einem Brandfall zu verschließen oder verschlossen zu halten, um eine Ausbreitung von Rauch und/oder Feuer durch die Durchgangsöffnung hindurch zu verhindern oder zumindest zu verzögern.

Das Wand- oder Deckenelement 14 besteht aus Holz oder einem ähnlichen, brennbaren Material. Es weist eine Durchgangsöffnung 16 auf, durch die hindurch ein Rohr 18 geführt ist. Alternativ oder zusätzlich kann durch die Durchgangsöffnung 16 auch wenigstens ein Kabel geführt sein, beispielsweise ein Kabel mit einem elektrischen Leiter.

Die Brandschutzeinrichtung 12 ist mit Befestigungsmitteln 20 im Bereich der Durchgangsöffnung 16 am Wand- oder Deckenelement 14 angebracht. Bei den Befestigungsmitteln 20 handelt es sich beispielsweise um Schrauben 22, die durch einen Flansch 24 der Brandschutzeinrichtung 12 hindurch in das Wand- oder Deckenelement 14 eingeschraubt sind. Die Brandschutzeinrichtung 12 kann jedoch auch auf jede andere geeignete Art und Weise am Wand- oder Deckenelement 14 angebracht sein.

Die Brandschutzeinrichtung 12 umfasst einen Grundkörper 26 mit einer Durchgangsöffnung 28, durch die hindurch das Rohr 18 geführt ist. Der Grundkörper 26 und/oder die Durchgangsöffnung 28 weisen bzw. weist insbesondere eine im Wesentlichen kreiszylindrische oder im allgemeinen mathematischen Sinne zylindrische Form auf.

An einer dem Wand- oder Deckenelement 14 zugewandten Frontseite des Grundkörpers 26 ist ein Expansionskörper 30 angebracht, der ein intumeszierendes Material enthält.

Bei dem intumeszierendes Material handelt es sich insbesondere um Blähgraphit, das auf ein Trägermaterial aufgebracht sein kann. Das Trägermaterial ist vorzugsweise aus einem feuerfesten Material mit großer Oberfläche gebildet, beispielsweise aus Glasfasern. Unter feuerfest ist hierbei zu verstehen, dass das Trägermaterial bei Temperaturen, die bei einem Brand auftreten, nicht verbrennt und seine Form nicht wesentlich verändert.

Ferner kann der Expansionskörper 30 eine Wandung 32 aus einem acrylatbasierten Material aufweisen. Die Wandung 32 ist insbesondere aus einem dehnbaren Material gebildet. Sie kann den Expansionskörper 30 ganz oder wenigstens teilweise umschließen.

Der Expansionskörper 30 erstreckt sich, in axialer Richtung A gesehen, radial zwischen der Durchgangsöffnung 28 und einer Außenseite des Grundkörpers 26. Vorzugsweise liegt der Expansionskörper 30 unmittelbar am Wand- oder Deckenelement 14 an.

Zudem kann an einer die Durchgangsöffnung 28 definierenden Wandung des Grundkörpers 26 ein weiterer Expansionskörper 34 mit einem intumeszierendes Material vorgesehen sein. Dies ist vorzugsweise der Fall, wenn das Rohr 18 nicht aus einem feuerfesten Material gebildet ist.

Die Funktionsweise der Brandschutzeinrichtung 12 wird im Folgenden anhand von Figur 2 näher beschrieben, in der die Brandschutzbaugruppe 10 in einem Brandfall dargestellt ist.

In einem Brandfall kommt es am Wand- oder Deckenelement 14 durch Abbrand zu einem Materialverlust, aufgrund dessen es zu einer Ausbreitung von Feuer und/oder Rauch durch die Durchgangsöffnung 16 kommen könnte.

Bei einer durch den Brand verursachten Wärmeeinwirkung dehnt sich jedoch der Expansionskörper 30 vom intumeszierendes Material getrieben aus und kompensiert so den durch Abbrand verursachten Materialverlust am Wand- oder Deckenelement 14.

Insbesondere sind der Expansionskörper 30 und das intumeszierende Material derart gestaltet, dass der Expansionskörper 30 in einem Brandfall einen Abbrand des Wand- oder Deckenelements 14 überkompensiert. Der Expansionskörper 30 kann also mehr intumeszierendes Material enthalten, als nötig wäre, um die Durchgangsöffnung 14 in einem Brandfall zu verschließen.

Dementsprechend kann sich Feuer und/oder Rauch nicht durch die Durchgangsöffnung 16 hindurch ausbreiten, wodurch eine Brandschutzzeit Brandschutzbaugruppe 10 wesentlich erhöht ist. Zudem ist auch eine Wärmeübertragung durch die Durchgangsöffnung 16 vermindert, da das intumeszierende Material vorzugsweise einen niedrigen Wärmeleitkoeffizienten aufweist.

Ist das Rohr 18 nicht aus einem feuerfesten Material gebildet, so kompensiert zudem der weitere Expansionskörper 34 eine durch Wärmeeinwirkung verursachte Verformung und/oder einen Abbrand des Rohrs 18 und verschließt so die Durchgangsöffnung 28.

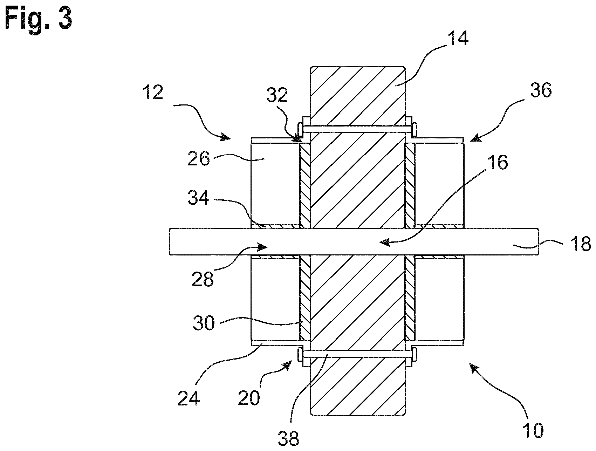

Figur 3 zeigt eine weitere Variante einer Brandschutzbaugruppe 10, bei der eine zweite Brandschutzeinrichtung 36 an einer der ersten Brandschutzeinrichtung 12 gegenüberliegenden Seite des Wand- oder Deckenelements 14 angebracht ist.

Die zweite Brandschutzeinrichtung 36 kann analog zur ersten Brandschutzeinrichtung 12 ausgebildet sein.

In der in Figur 3 gezeigten Variante weisen die beiden Brandschutzeinrichtungen 12, 36 gemeinsame Befestigungsmittel 20 auf. Dabei handelt es sich beispielsweise um durch das Wand- oder Deckenelement 14 hindurch verlaufende Gewindeschrauben mit entsprechenden Muttern.

Alternativ können die beiden Brandschutzeinrichtungen 12, 36 jedoch auch voneinander unabhängig am Wand- oder Deckenelement 14 angebracht sein, beispielsweise angeschraubt.

## Patentansprüche

1. Brandschutzeinrichtung (12) zum Abschotten von Durchgangsöffnungen (16) in Wand- oder Deckenelementen (14) aus Holz oder einem ähnlichen Material, insbesondere von Leitungs- oder Rohrdurchgängen, mit einem eine Durchgangsöffnung (28) aufweisenden Grundkörper (26) und zumindest einem Expansionskörper (30), der an einer Stirnseite des Grundkörpers (26) angebracht ist und ein intumeszierendes Material enthält, wobei die Stirnseite eine dem Wand-oder Deckenelement zugewandte Frontseite des Grundkörpers (26) ist, **dadurch gekennzeichnet, dass** sich der Expansionskörper (30) in axialer Richtung A gesehen, radial zwischen der Durchgangsöffnung (28) und einer Außenseite des Grundkörpers (26) erstreckt.

2. Brandschutzeinrichtung (12) nach Anspruch 1, **dadurch gekennzeichnet, dass** der Grundkörper (26) eine im Wesentlichen zylindrische Form aufweist.

3. Brandschutzeinrichtung (12) nach einem der vorhergehenden Ansprüche, **dadurch gekennzeichnet, dass** zumindest ein weiterer Expansionskörper (34) an einer bezüglich der Durchgangsöffnung (28) in radialer Richtung betrachteten Innen- und/oder Außenseite des Grundkörpers (26) vorgesehen ist.

4. Brandschutzeinrichtung (12) nach einem der vorhergehenden Ansprüche, **dadurch gekennzeichnet, dass** sich der Expansionskörper (34) in einem äußeren Bereich der Stirnseite erstreckt.

5. Brandschutzeinrichtung (12) nach einem der vorhergehenden Ansprüche, **dadurch gekennzeichnet, dass** der Expansionskörper (34) Blähgraphit enthält.

6. Brandschutzeinrichtung (12) nach einem der vorhergehenden Ansprüche, **dadurch gekennzeichnet, dass** das intumeszierende Material auf ein Trägermaterial aufgebracht ist.

7. Brandschutzbaugruppe (10) mit einem Wand- oder Deckenelement (14) aus Holz oder einem ähnlichen Material, das eine Durchgangsöffnung (16) aufweist, insbesondere einen Leitungs- oder Rohrdurchgang, und wenigstens einer Brandschutzeinrichtung (12) nach einem der vorhergehenden Ansprüche, wobei die Brandschutzeinrichtung (12) im Bereich der Durchgangsöffnung (16) am Wand- oder Deckenelement (14) angebracht ist.

8. Brandschutzbaugruppe (10) nach Anspruch 7, **dadurch gekennzeichnet, dass** eine weitere Brandschutzeinrichtung (38) gemäß einem der Ansprüche 1 bis 7 an einer der ersten Brandschutzeinrichtung (12) gegenüberliegenden Seite am Wand- oder Deckenelement (14) angebracht ist.

9. Brandschutzbaugruppe (10) nach Anspruch 7 oder 8, **dadurch gekennzeichnet, dass** wenigstens eine Brandschutzeinrichtung (12) derart an dem Wand- oder Deckenelement (14) angebracht ist, dass der Expansionskörper (30) unmittelbar am Wand- oder Deckenelement (14) anliegt.

## Claims

1. Fire protection device (12) for sealing through-openings (16) in wall or ceiling elements (14) made of wood or a similar material, in particular for sealing line or pipe feedthroughs, comprising a main body (26) having a through-opening (28), and at least one expansion body (30) which is attached to an end face of the main body (26) and contains an intumescent material, the end face being a front face of the main body (26) which faces the wall or ceiling element, **characterized in that** the expansion body (30) extends radially between the through-opening (28) and an outer face of the main body (26) when viewed in the axial direction A.

2. Fire protection device (12) according to claim 1, **characterized in that** the main body (26) is of a substantially cylindrical shape.

3. Fire protection device (12) according to any of the preceding claims, **characterized in that** at least one further expansion body (34) is provided on an inner and/or outer face of the main body (26) relative to the through-opening (28) when viewed in the radial direction.

4. Fire protection device (12) according to any of the preceding claims, **characterized in that** the expansion body (34) extends in an outer region of the end face.

5. Fire protection device (12) according to any of the preceding claims, **characterized in that** the expansion body (34) contains expandable graphite.

6. Fire protection device (12) according to any of the preceding claims, **characterized in that** the intumescent material is applied to a carrier material.

7. Fire protection assembly (10) comprising a wall or ceiling element (14) made of wood or a similar material, which element has a through-opening (16), in particular a line or pipe feedthrough, and comprising at least one fire protection device (12) according to any of the preceding claims, wherein the fire protection device (12) is attached to the wall or ceiling element (14) in the region of the through-opening (16).

8. Fire protection assembly (10) according to claim 7, **characterized in that** a further fire protection device (38) according to any of claims 1 to 7 is attached to the wall or ceiling element (14) on a side opposite the first fire protection device (12).

9. Fire protection assembly (10) according to either claim 7 or claim 8, **characterized in that** at least one fire protection device (12) is attached to the wall or ceiling element (14) in such a way that the expansion body (30) rests directly against the wall or ceiling element (14).

## Revendications

1. Dispositif de protection contre l'incendie (12) permettant de calfeutrer des ouvertures de passage (16) dans des éléments formant mur ou plafond (14) en bois ou en un matériau similaire, en particulier des passages de conduites ou de tuyaux, comportant un corps de base (26) présentant une ouverture de passage (28), et au moins un corps d'expansion (30) qui est monté sur une face frontale du corps de base (26) et qui contient un matériau intumescent, dans lequel la face frontale est une face avant du corps de base (26) tournée vers l'élément formant mur ou plafond, **caractérisé en ce que** le corps d'expansion (30), vu dans une direction axiale A, s'étend radialement entre l'ouverture de passage (28) et une face extérieure du corps de base (26).

2. Dispositif de protection contre l'incendie (12) selon la revendication 1, **caractérisé en ce que** le corps de base (26) présente une forme sensiblement cylindrique.

3. Dispositif de protection contre l'incendie (12) selon l'une des revendications précédentes, **caractérisé en ce qu'**au moins un autre corps d'expansion (34) est prévu sur une face intérieure et/ou extérieure du corps de base (26), considérées dans une direction radiale par rapport à l'ouverture de passage (28).

4. Dispositif de protection contre l'incendie (12) selon l'une des revendications précédentes, **caractérisé en ce que** le corps d'expansion (34) s'étend dans une zone extérieure de la face frontale.

5. Dispositif de protection contre l'incendie (12) selon l'une des revendications précédentes, **caractérisé en ce que** le corps d'expansion (34) contient du graphite expansé.

6. Dispositif de protection contre l'incendie (12) selon l'une des revendications précédentes, **caractérisé en ce que** le matériau intumescent est appliqué sur un matériau de support.

7. Ensemble de protection contre l'incendie (10) comportant un élément formant mur ou plafond (14) en bois ou en un matériau similaire qui présente une ouverture de passage (16), en particulier un passage de conduite ou de tuyau, et au moins un dispositif de protection contre l'incendie (12) selon l'une des revendications précédentes, dans lequel le dispositif de protection contre l'incendie (12) est monté sur l'élément formant mur ou plafond (14) dans la zone de l'ouverture de passage (16).

8. Ensemble de protection contre l'incendie (10) selon la revendication 7, **caractérisé en ce qu'**un autre dispositif de protection contre l'incendie (38) selon l'une des revendications 1 à 7 est monté sur une face opposée au premier dispositif de protection contre l'incendie (12) sur l'élément formant mur ou plafond (14).

9. Ensemble de protection contre l'incendie (10) selon la revendication 7 ou 8, **caractérisé en ce qu'**au moins un dispositif de protection contre l'incendie (12) est monté sur l'élément formant mur ou plafond (14) de telle sorte que le corps d'expansion (30) s'applique directement sur l'élément formant mur ou plafond (14).
